# EUROPEAN PATENT APPLICATION

(11) **EP 1 428 685 A2**
(43) Date of publication of application: **16.06.2004**
(21) Application number: 03028419.4
(22) Date of filing: 11.12.2003
(51) Int. Cl.: B60B 21/06

(54) **A bicycle wheel rim and a wheel comprising the rim**

(30) Priority: 13.12.2002 IT TO20020223 U
(71) Applicant: Marchisio Engineering S.r.l., 14100 Asti (IT)
(72) Inventor: Marchisio, Davide, 14100 Asti (IT)
(74) Representative: Fioravanti, Corrado

(57) **Abstract**

A bicycle wheel rim formed by an annular element (1) having a box-like cross-section comprising a radially outer wall (11), side walls (13, 14), and a radially inner wall (12) having formations (21, 22, 23) arranged for the attachment of spokes (R). The radially inner wall (12) comprises uniform wall sections (31, 33, 35) which have a uniform thickness along the length of the wall (12) and transitional wall sections (32, 34, 36) which have a variable thickness and are interposed between the uniform wall sections. The radially inner wall (12) has first and second uniform wall sections (31, 35) in which the formations (21, 22, 23) arranged for the attachment of the spokes (R) are formed. The radially inner wall (12) has a thickness less than the thickness of the first and second uniform wall sections (31, 35). The thickness of the first wall sections (31) has a nominal value (S1) and the thickness of the second wall sections (35) has a value (S3) less than the nominal value (S1). The first and second sections (31, 35) are arranged in a manner such that a first section (31) is interposed between two second sections (35).

## Description

The present invention relates to a bicycle wheel rim having the characteristics defined in the preamble to Claim 1.

A rim of this type is described in European patent application EP 1 084 868. In the rim of that patent application, the thickness of the radially inner wall of the profiled section from which the rim is formed has a nominal value in the regions that are arranged for the attachment of the spokes and a value less than that nominal value in the intermediate regions that are interposed between two adjacent attachment regions. This reduction in thickness is achieved by milling of the radially inner wall of the profiled section produced by the extruder. The rim thus obtained is lighter than rims in which the radially inner wall of the profiled section has the same thickness along its perimeter.

It is also known that, in wheels of some types, in which the spokes extend from the radially inner wall of the rim in an alternating sequence on one side and on the other of the plane of the wheel, the spokes disposed on one side of the wheel may have an inclination different from that of the spokes disposed on the other side.

The object of the invention is to propose an improved rim in which it is possible to reduce the weight of the rim structure without significantly reducing its fatigue strength.

This object is achieved according to the invention by a bicycle wheel rim having the characteristics defined in the claims.

As will be explained below, the rim is particularly suitable for wheels of the above-described types in which the spokes disposed on one side of the wheel have an inclination different from that of the spokes disposed on the other side.

A further subject of the present invention is a bicycle wheel comprising a rim having the characteristics defined in the claims.

A preferred but non-limiting embodiment of the invention will now be described with reference to the appended drawings, in which:
Figure 1 is a perspective view of a portion of an embodiment of a rim according to the present invention,
Figure 2 is a longitudinal section through the rim of Figure 1, and
Figure 3 is a perspective view of a portion of a second embodiment of a rim according to the invention.

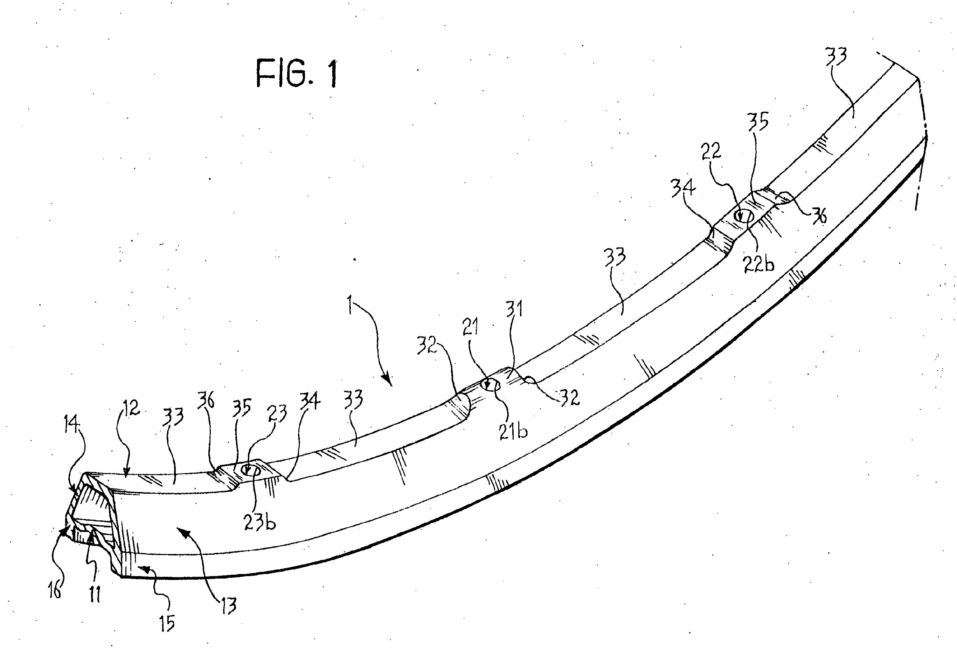

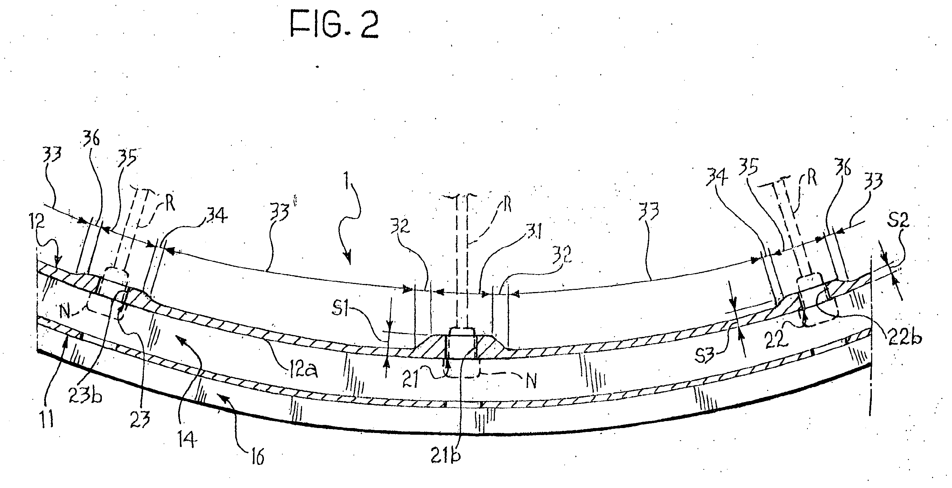

With reference to Figures 1 and 2, these show a portion of a rim 1 according to the invention. The rim 1 is formed in known manner from a piece of profiled section of aluminium alloy or of another material, which is bent into a ring and the two ends of which are joined together by welding or by means of a joint. The profiled section has a conventional, box-like structure comprising a radially outer wall 11, a radially inner wall 12, and side walls 13 and 14 which are extended downwards by flanges 15 and 16. The flanges 15 and 16 form, with the radially outer wall 11, an annular channel in which the tyre (not shown) is housed.

The radially inner wall 12 has a plurality of formations 21, 22, 23 arranged for the attachment of spokes R of the wheel. These regions are distributed uniformly along the length of the radially inner wall 12 and comprise respective holes 21b, 22b, 23b for the mounting of terminal elements N (shown schematically in Figure 2) of the spokes R, for example, screw couplings, known in the field as "nipples", for the attachment of the spokes.

The thickness of the radially inner wall 12 is variable along the length of that wall. In particular, the radially inner wall 12 comprises a plurality of wall sections 31 (only one of which is shown in the drawings) which have a substantially uniform thickness along the length of the wall and in which that thickness has a nominal value S1, that is, a value substantially equal to that of the wall 12 at the time when the profiled section is formed. The thickness values indicated here and below are relative to the radially outer circumferential surface 12a of the wall 12.

Outside the uniform wall sections 31 which have the nominal thickness, the wall 12 has a reduction in thickness produced, for example, by milling. If the rim of Figure 2 is observed along the length of the wall 12 in an anticlockwise (or clockwise) direction, a section 32 having a thickness which decreases from the nominal value S1 to a predetermined minimum thickness value S2 extends beside the uniform wall section 31. Still in the same direction of observation, beyond the section 32 of variable thickness, there extends a wall section 33 which has a substantially uniform thickness along the length of the wall 12 and in which that thickness has a value equal to the minimum value S2.

Beyond the uniform wall section 33 of minimum thickness, there extends a section 34 having a thickness which increases along the length of the wall 12 from the minimum value to an intermediate value S3 between the nominal value S1 and the minimum value S2. Beyond the section 34 of variable thickness, there extends a wall section 35 which has a substantially uniform thickness and in which the thickness has a value equal to the intermediate value S3.

Beyond the uniform wall section 35 of intermediate thickness S3 a section 36 is formed, having a thickness which decreases along the length of the wall 12 from the intermediate value S3 to the minimum value S2. Beyond this section 36 of variable thickness there extends a further uniform wall section 33 in which the thickness has a value equal to the minimum value S2.

Beyond the section 33, there extends a further section 31 of nominal thickness S1 (not shown) and the above-described sequence is repeated along the length of the radially inner wall 12 of the rim 1 so that the uniform wall sections 31 of thickness S1 alternate with the uniform wall sections 35 of thickness S3.

The formations 21, 22, 23 arranged for the attachment of the spokes R are disposed in the uniform wall sections 31 and 35 having the nominal thickness S1 and the intermediate thickness S3, respectively.

As mentioned above, the sections 32, 33, 34, 35, 36 with thicknesses less than the nominal value can be produced by machining, for example, by milling. With a numerically controlled miller, the sections 33, 35 of minimum thickness S2 and of intermediate thickness S3 are formed with the use of two different radii of curvature centred on the axis of revolution of the rim 1. The transitional sections 32, 34, 36 are formed with the use of a predetermined radius of curvature centred in a manner such as to connect the uniform wall sections 33 of minimum thickness S2 to the sides of the uniform wall sections 31 and 35.

The stresses resulting from the tension of the spokes are concentrated in the zones of the radially inner wall which are in the vicinity of the attachment formations. In these zones, the thickness of the wall is equal to that of conventional rims. In the zones between the attachment formations, in which the concentration of stresses is low, it is therefore possible to reduce the thickness as described above.

In wheels of the above-mentioned types in which the spokes disposed on one side of the wheel have an inclination different from that of the spokes disposed on the other side, the stresses are greater for the points of attachment of the less inclined spokes and less for the points of attachment of the more inclined spokes. It is consequently possible to reduce the thickness of the regions of attachment of the less inclined spokes as described above.

Naturally, the rim according to the invention can also be used in wheels in which the spokes have the same inclination to the plane of the wheel.

The transitional sections of the radially inner wall permit a homogeneous distribution of the stresses between the uniform wall sections.

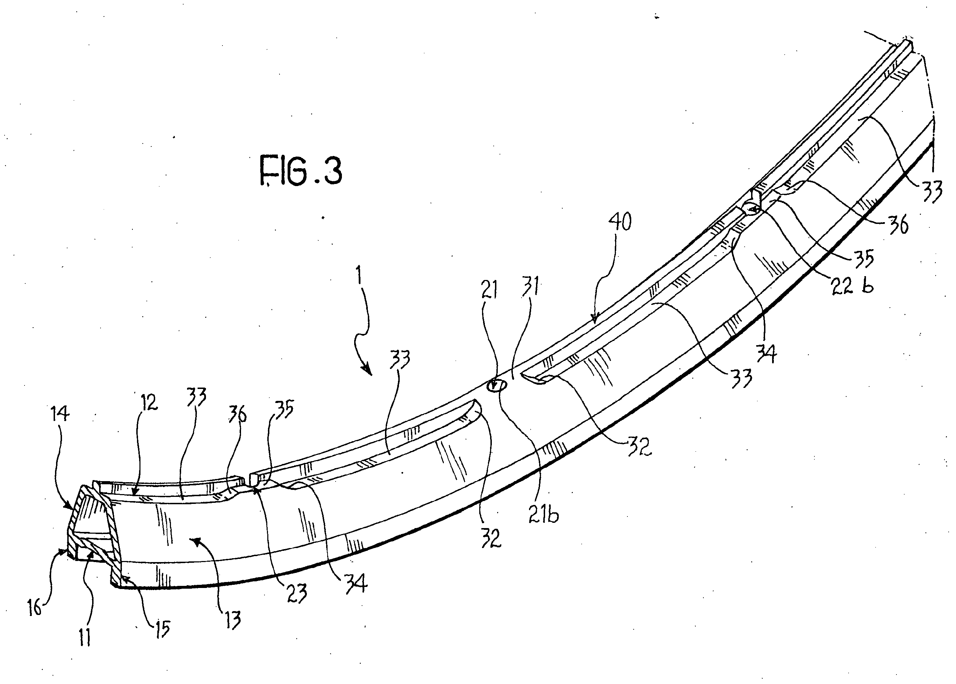

Figure 3 shows a second embodiment of the rim according to the present invention. Features identical to those of the first embodiment are indicated by the same reference numerals and will not be described further.

In comparison with the first embodiment, the rim 1 has, in addition, a central rib 40 which extends circumferentially along the median line of the radially inner wall 12. The sum of the thickness of the wall 12 and the height of the rib 40 has a value equal to the nominal value S1 along the entire wall 12 so that the rib has a variable height along the wall 12. At the sides of the rib, since the overall thickness is determined solely by the wall 12, that thickness will be variable in accordance with the same sequence as was described with reference to the first embodiment.

The rib 40 can be produced by machining. For example, instead of milling the radially inner wall 12 for its entire transverse extent (as for the rim of Figure 1), the wall 12 may be milled on opposite sides of the plane of the rim 1, leaving a central portion of predetermined transverse thickness unaltered.

In comparison with the first embodiment, the presence of the rib 40 improves the mechanical properties of the rim 1.

## Claims

1. A bicycle wheel rim formed by an annular element (1) having a box-like cross-section comprising a radially outer wall (11), side walls (13, 14), and a radially inner wall (12) having formations (21, 22, 23) arranged for the attachment of spokes (R) of the wheel and distributed uniformly along the length of the radially inner wall, the radially inner wall (12) comprising uniform wall sections (31, 33, 35) which have a substantially uniform thickness along the length of the wall (12) and transitional wall sections (32, 34, 36) which have a variable thickness along the length of the wall (12) and are interposed between different uniform wall sections,
**characterized in that** the radially inner wall (12) has first and second uniform wall sections (31, 35) in which the formations (21, 22, 23) arranged for the attachment of the spokes (R) are formed, the radially inner wall (12) having a thickness less than the thickness of the first and second uniform wall sections (31, 35), the thickness of the first wall sections (31) having a nominal value (S1) and the thickness of the second wall sections (35) having a value (S3) less than the nominal value (S1), the first and second sections (31, 35) being arranged along the length of the wall (12) in a manner such that a first section (31) is interposed between two successive second sections (35).

2. A rim according to Claim 1 in which the radially inner wall (12) also has uniform wall sections (33) the thickness of which has a minimum value (S2) less than the thickness of the first and second uniform wall sections (31, 35) and which are interposed between adjacent first (31) and second (35) sections.

3. A rim according to any one of the preceding claims in which the wall (12) also has a rib (40) which extends circumferentially along the median line of the radially inner wall (12).

4. A rim according to Claim 3 in which the rib (40) has a variable thickness along the wall (12) such that the sum of the thickness of the wall (12) and the height of the rib (40) has a uniform value equal to the nominal value (S1).

5. A rim according to Claim 3 or Claim 4 in which the rib (40) extends along the entire length of the radially inner wall (12).

6. A bicycle wheel comprising a rim according to any one of the preceding claims.
